# EUROPEAN PATENT APPLICATION

(11) **EP 2 532 861 A1**
(43) Date of publication of application: **12.12.2012**
(21) Application number: 11739706.7
(22) Date of filing: 31.01.2011
(51) Int. Cl.: F02D 19/06, F02M 21/02

(54) **FUEL SWITCHOVER CONTROL DEVICE AND METHOD**

(30) Priority: 05.02.2010 JP 2010024433
(71) Applicant: Keihin Corporation, Shinjuku-ku, Tokyo 163-0539 (JP)
(72) Inventor: SAITO Yoshio, Shioya-gun Tochigi 329-1233 (JP)
(74) Representative: Ilgart, Jean-Christophe
(86) International application number: PCT/JP2011/051907
(87) International publication number: WO 2011/096358

(57) **Abstract**

Provided is a fuel switchover control device for an internal combustion engine which can use multiple types of fuel. The fuel switchover control device includes controller which, when first fuel is being used, performs different types of fuel switchover control when the pressure of the first fuel exceeds an upper limit threshold value and when the pressure of the first fuel falls below a lower limit threshold value.

## Description

### Technical Field of the Invention

The present invention relates to a fuel switchover control device and method.
Priority is claimed on Japanese Patent Application No. 2010 - 024433 filed on February 5, 2010, the content of which is incorporated herein by reference.

### Background Art

In recent years, the introduction of a bi-fuel engine system which selectively switches over between a liquid fuel such as gasoline and a gas fuel such as compressed natural gas (CNG) and supplies the selected fuel to an engine has progressed, as a technology improving the fuel efficiency of a vehicle and environmental protection performance.
According to the bi-fuel engine system, generally, in a case of using the gas fuel, high pressure gas fuel filled into a gas tank is decompressed to a desired pressure by a regulator and then, is supplied to the fuel injection valve dedicated to gas fuel.

In a case when there is an abnormality in the pressure of the gas fuel, since the entire system is seriously adversely affected, various alternative technologies have been proposed in the related art. For example, the following Patent Document 1 discloses a technology that can switchover the fuel being supplied to the engine to a liquid fuel in a case where a fuel supply defect is detected due to an abnormality in the pressure of the gas fuel and the like in the bi-fuel engine system as mentioned above.

### Prior Art Documents

### Patent Documents

Patent Document 1: Japanese Unexamined Patent Application, First Publication No.2008-19804

### Summary of the Invention

### Problems to be Solved by the Invention

In the bi-fuel engine system, there is concern of a high pressure abnormality of the gas fuel causing damage to the fuel supply pipe or an operating fault of the fuel injection valve, or a low pressure abnormality of the gas fuel causing engine stalling due to a shortage of fuel. However, the technology of the Patent Document 1 cannot appropriately perform the switchover control to fuel according to the pressure state (high pressure abnormality or low pressure abnormality) of the gas fuel since the technology is only a simple switchover to another fuel when the pressure abnormality of the gas fuel occurs.

In view of the above-mentioned circumstances, an object of the present invention is to provide a fuel switchover control device and method which can appropriately perform the fuel switchover control to be in accordance with the pressure state of the first fuel (for example, a gas fuel).

### Means for Solving the Problems

In order to accomplish the above-mentioned object, according to an aspect of the present invention, there is provided a fuel switchover control device of an internal combustion engine which can use multiple types of fuel. The device includes controller which, when a first fuel is being used, performs different types of fuel switchover control, when a pressure of the first fuel exceeds an upper limit threshold value and when the pressure of the first fuel falls below a lower limit threshold value.
Further, according to another aspect of the invention, in the fuel switchover control device, the controller performs continuously an operation of an injection valve of the first fuel, while closing a shut-off valve of the first fuel, when the pressure of the first fuel exceeds the upper limit threshold value, and the controller stops the operation of the injection of the first fuel and performs a switchover to other fuel, when the pressure of the first fuel falls below a lowering determination threshold value.
Further, according to still another aspect of the present invention, in the fuel switchover control device, the controller closes the shut-off valve of the first fuel and stops the operation of the injection valve of the first fuel, and performs the switchover to other fuel, when the pressure of the first fuel falls below the lower limit threshold value.
Meanwhile, according to still another aspect of the present invention, there is provided a fuel switchover control method including, when a first fuel is being used, performing a different types of fuel switchover control when a pressure of the first fuel exceeds an upper limit threshold value and when a pressure of the first fuel falls below a lower limit threshold value.

### Effect of the Invention

According to the present invention, when using the first fuel, since a different fuel switchover control is performed between in a case where the pressure of the first fuel exceeds the upper limit threshold value and in a case where the pressure of the first fuel falls below the lower limit threshold value, it is possible to perform the proper fuel switchover control in accordance with the pressure state (high pressure abnormality or low pressure abnormality) of the first fuel.

### Brief Description of Drawings

FIG. 1 is a schematic configuration diagram of a bi-fuel engine system in an embodiment according to the present invention.
FIG. 2 is a block configuration diagram of a 1st-ECU 5 in the embodiment according to the present invention.
FIG. 3 is a block configuration diagram of a 2nd-ECU 6 in the embodiment according to the present invention.
FIG. 4 is a flowchart illustrating a fuel switchover control when using gas fuel.
FIG. 5 is diagram illustrating opening and closing states of a shut-off valve 41 and an operating state of the gas fuel injection valve 23 when a high pressure abnormality of the gas fuel occurs and when a low pressure abnormality of the gas fuel occurs.

### Description of Embodiments

Hereinafter, an embodiment according to the present invention will be described with reference to the drawings. Further, an example of an ECU (Electronic Control Unit), which is used in the bi-fuel engine system which performs a selective switchover control between the liquid fuel such as gasoline and the gas fuel such as compressed natural gas (CNG) to simply supply the selected fuel to a single engine as a fuel switchover control device according to the present invention, will be described hereinbelow.

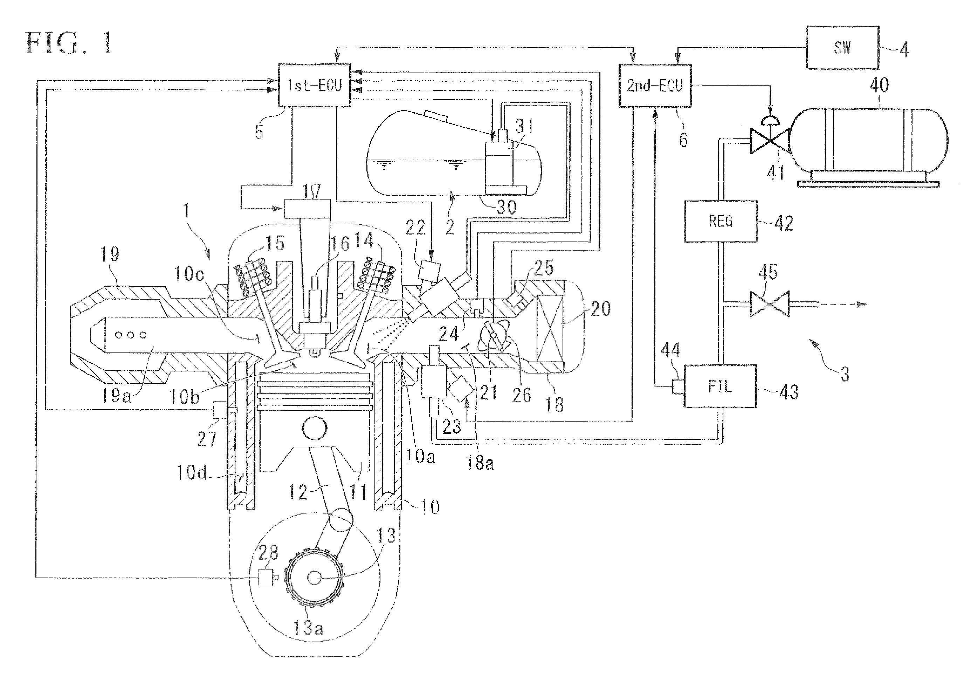

FIG. 1 is a schematic diagram illustrating a configuration of the bi-fuel engine system related to the embodiment according to the present invention. As shown on FIG. 1, the bi-fuel engine system in the embodiment is schematically constituted by an engine 1, a liquid fuel supply unit 2, a gas fuel supply unit 3, a fuel switchover switch 4, a 1st-ECU 5 and a 2nd -ECU 6.

The engine 1 is a 4 cycle engine which can selectively use a liquid fuel and a gas fuel, and includes a cylinder 10, a piston 11, a connecting rod 12, a crankshaft 13, an inlet air valve 14, an outlet air valve 15, an ignition plug 16, an ignition coil 17, an inlet air pipe 18, an outlet air pipe 19, an air cleaner 20, a throttle valve 21, a liquid fuel injection valve 22, a gas fuel injection valve 23, an inlet air pressure sensor 24, an inlet air temperature sensor 25, a throttle opening degree sensor 26, a cooling water temperature sensor 27 and a crank angle sensor 28.

The cylinder 10 is a hollow cylindrical member in which the piston 11 is provided and repeatedly performs 4 strokes of suction, compression, combustion (expansion) and exhaust to carry out a back and forth movement of the piston 11. The cylinder 10 includes an inlet air port 10a which is a flow path for supplying a mixture of air and fuel to a combustion chamber 10b, the combustion chamber 10b which is a space for holding the mixture compressed in the compressed stroke to combust the compressed mixture in combustion stroke and an outlet air port 10c which is a flow path for discharging the outlet gas from the combustion chamber 10b to the outside in the outlet air stroke. The cylinder 10 has a cooling water path 10d for circulating cooling water on the outer wall.

The piston 11 is connected with the crankshaft 13 for converting the back-and-forth movement of the piston 11 to rotation movement through the connecting rod 12. The crankshaft 13 is extended in a direction perpendicular to the direction of the back-and-forth movement of the piston 11 and is connected to a flywheel, a mission gear and the like which are not shown.
The crankshaft 13 is coaxially connected with a rotor 13a used for detecting a crank angle. The rotor 13a includes a plurality of protrusions on the outer circumference thereof, the rear end of each protrusion is provided at an angular interval (for example, a 20° interval).

The inlet air valve 14 is a valve member for opening and closing an aperture portion of the combustion chamber 10b side in the inlet air port 10a. The inlet air valve 14 is connected to a camshaft which is not shown and is operated to open and close in response to each stroke by the camshaft. The outlet air valve 15 is a valve member for opening and closing an aperture portion of the combustion chamber 10b side in the outlet air port 10c.
The outlet air valve 15 is connected to a camshaft which is not shown and is operated to open and close in response to each stroke by the camshaft.

The ignition plug 16 is mounted on the top of the combustion chamber 10b such that an electrode is exposed on the inside of combustion chamber 10b. The ignition plug 16 generates a spark between electrodes by a high voltage signal supplied from the ignition coil 17. The ignition coil 17 is a transformer constituted by a primary winding and a secondary winding, and steps up the voltage signal for igniting, which is supplied from the 1st-ECU 5 to the primary winding, and supplies the stepped up voltage signal from the secondary winding to the ignition plug 16.

The inlet air pipe 18 is a pipe for supplying air and is connected with a cylinder 10 such that the internal inlet air flow path 18a communicates with the inlet air port 10a.
The outlet air pipe 19 is a pipe for discharging the outlet aired gas and is connected to the cylinder 10 such that the internal outlet air flow path 19a communicates with the outlet air port 10c.
The air cleaner 20 is provided at the upstream of the inlet air pipe 18 and purifies the air taken in from the outside and then feeds to an inlet air flow path 18a.

Throttle valve 21 is provided in an inside of the inlet air flow path 18a and is rotated in response to the throttle operation (or accelerator operation). Eventually, the cross-sectional area of the inlet air flow path 18a is changed and the amount of inlet air is changed by the rotation of the throttle valve 21.
The liquid fuel injection valve 22 is an electromagnetic valve (for example, a solenoid valve and the like) provided at the inlet air pipe 18 such that an injection tip is exposed in the inlet air port 10a side. The liquid fuel injection valve 22 injects the liquid fuel (gasoline and the like) supplied from the liquid fuel supply unit 2 in response to a fuel injection drive signal supplied from the 1st-ECU 5.

The gas fuel injection valve 23 is an electromagnetic valve (for example, solenoid valve and the like) provided at the inlet air pipe 18 such that an injection tip is exposed in the inlet air port 10a side. The gas fuel injection valve 23 injects the gas fuel (CNG and the like) supplied from the gas fuel supply unit 3 in response to a fuel injection drive signal supplied from the 2nd-ECU 6.
The inlet air pressure sensor 24 is a semiconductor pressure sensor using, for example, a piezo resistance effect. The inlet air pressure sensor 24 is provided at the inlet air pipe 18 such that a sensing surface is exposed at the inlet air flow path 18a side at downstream of the throttle valve 21, and outputs the inlet air pressure signal to the 1st-ECU 5 in response to the inlet air pressure in the inlet air pipe 18.

The inlet air temperature sensor 25 is provided at the inlet air pipe 18 such that a sensing portion is exposed at the inlet air flow path 18a side at the upstream of the throttle valve 21 and outputs the inlet air temperature signal to the 1st-ECU 5 in response to the inlet air temperature in the inlet air pipe 18.
The throttle opening degree sensor 26 outputs a throttle opening degree signal to the 1st-ECU 5 according to the opening degree of the throttle valve 21. The cooling water temperature sensor 27 is provided at the cylinder 10 such that the sensing portion is exposed at the cooling water path 10d side, and outputs a cooling water temperature signal to the 1st-ECU 5 according to the temperature of the cooling water flowing through the cooling water path *10d.

The crank angle sensor 28 is for example, an electromagnetic type pick-up sensor. The crank angle sensor 28 outputs a pair of pulse like signals having different polarities to the 1st-ECU 5 every time each projection provided on the outer periphery of the rotor 13a passes through the vicinity of the sensor. More specifically, the crank angle sensor 28 outputs a pulse like signal having an amplitude of negative polarity in a case where a front end of each projection has passed in the rotation direction, and outputs a pulse like signal having an amplitude of positive polarity in a case where a rear end of each projection has passed in the rotation direction.

The liquid fuel supply unit 2 is constituted by the liquid fuel tank 30 and the fuel pump 31.
The liquid fuel tank 30 is a container for storing for example, a gasoline fuel or a liquid fuel such as an alcohol fuel. The fuel pump 31 pumps the liquid fuel in the liquid fuel tank 30 and transfers to the fuel inlet of the liquid fuel injection valve 22 according to a pump drive signal supplied from the 1st-ECU 5.

The gas fuel supply unit 3 is constituted by a gas fuel tank 40, a shut-off valve 41, a regulator 42, a filter 43, a fuel pressure sensor 44 and a relief valve 45.
The gas fuel tank 40 is a pressure-resistant container in which the high pressure gas fuel, such as CNG for example, is filled.
The shut-off valve 41 is an electromagnetic valve provided at the fuel outlet of the gas fuel tank 40. The shut-off valve 41 operates to open and close the fuel outlet of the gas fuel tank 40 through an opening operation and closing operation according to the drive signal of the shut-off valve from the 2nd-ECU 6. The regulator 42 is a pressure regulating valve provided at the downstream of the shut-off valve 41. The regulator 42 reduces the pressure of the gas fuel supplied from the gas fuel tank 40 by a predetermined pressure when opening the shut-off valve 41 and then supplies to the filter 43 provided at the downstream.

The filter 43 removes foreign matter contained in the gas fuel supplied from the regulator 42 (for example, foreign matter such as compressor oil in the gas fuel) and supplies the gas fuel to the fuel inlet of the gas fuel injection valve 23 after removal of the foreign matter.
A fuel pressure sensor 44 is a pressure sensor provided at the filter 43. The fuel pressure sensor 44 detects the pressure of the gas fuel (fuel pressure) supplied to the gas fuel injection valve 23 and outputs the fuel pressure detection signal indicating the result of the detection to the 2nd-ECU 6.
A relief valve 45 is a safety valve interposed in a branch pipe communicating with the pipe connecting the regulator 42 and the filter 43. The relief valve 45 discharges (relieves) the gas fuel to the outside by opening the valve when the fuel pressure of the downstream of the regulator 42 exceeds a preset pressure.

The fuel switchover switch 4 is a switch that makes the switchover of the fuel by a manual operation possible. The fuel switchover switch 4 outputs a fuel designation signal indicating its switchover state, in other words, whether a liquid fuel has been designated or a gas fuel has been designated as the fuel used in the engine 1, to the 2nd-ECU 6.

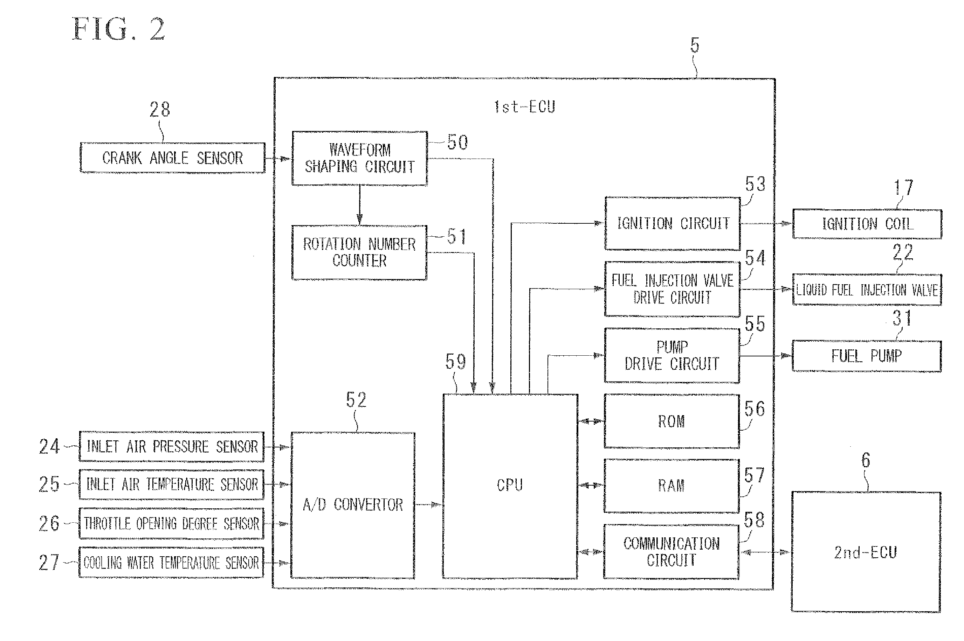

The 1st-ECU 5 performs the control of the operation of engine 1 using mainly the gas fuel and includes a waveform shaping circuit 50, a rotation counter 51, an A/D convertor 52, an ignition circuit 53, a fuel injection valve drive circuit 54, a pump drive circuit 55, a ROM (Read Only Memory) 56, a RAM (Random Access Memory) 57, a communication circuit 58 and a CPU (Central Processing Unit) 59 as shown in FIG. 2.

The waveform shaping circuit 50 performs the waveform shaping of a crank signal input from the crank angle sensor 28 into a square wave pulse signal (for example, negative polarity crank signal into a high level and positive polarity crank signal into a low level) and sends the shaped crank signal to the rotation counter 51 and the CPU 59. That is to say, the square wave pulse signal is a signal having a period of time required when the crankshaft 13 rotates by an angle of 20°. Hereinafter, the square wave pulse signal output from the waveform shaping circuit 50 is referred to as a crank pulse signal.

The rotation counter 51 calculates the number of rotations of the engine, based on the crank pulse signal input from the waveform shaping circuit 50 and outputs the calculated result to the CPU 59.
The A/D convertor 52 converts an inlet air pressure signal input from the inlet air pressure sensor 24, an inlet air temperature signal input from the inlet air temperature sensor 25, a throttle opening degree signal input from the throttle opening degree sensor 26 and a cooling water temperature signal input from the cooling water temperature sensor 27 into a digital signal (inlet air pressure value, inlet air temperature value, throttle opening degree value, cooling water temperature value) and outputs the converted signals to the CPU 59.

The ignition circuit 53 includes a capacitor accumulating a power supply voltage supplied from the battery, not shown, and discharges the accumulated electric charge to the primary winding of the ignition coil 17 as a voltage signal for the ignition according to the ignition control signal input from the CPU 59.
The fuel injection valve drive circuit 54 creates a fuel injection valve drive signal according to a fuel injection control signal input from the CPU 59 and outputs the fuel injection valve drive signal to the liquid fuel injection valve 22.
The pump drive circuit 55 creates a pump drive signal according to a fuel supply control signal input from the CPU 59 and outputs the fuel drive signal to the fuel pump 31.

The ROM 56 is a non-volatile memory for storing an engine control program or various set data in advance in order to implement the various functions of the CPU 59.
The RAM 57 is a volatile working memory which is used as a temporary storage destination of data when the CPU 59 runs the engine control program to perform various operations.
The communication circuit 58 is a communication interface for implementing the data communication between the 1st-ECU 5 and the 2nd-ECU 6 under the control by the CPU 59 and is connected with the 2nd-ECU 6 through communication cable.

The CPU 59 performs the operation control of the engine 1 using the liquid fuel, based on the crank pulse signal input from the waveform shaping circuit 50, the engine rotations acquired from the rotation counter 51, the inlet air pressure value, the inlet air temperature value, the throttle opening degree value and the cooling water temperature value, which are acquired from the A/D convertor 52, and the various information acquired from the 2nd-ECU 6 through the communication circuit 58, based on an engine program stored in the ROM 56.

Specifically, the CPU 59 monitors the rotation state (in other words, a position of piston 11 within the cylinder 10) of the crankshaft 13, based on the crank pulse signal input from the waveform shaping circuit 50 and sparks the ignition plug 16 by outputting the ignition control signal to the ignition circuit 53 at the time period when the piston 11 has reached a position corresponding to the ignition timing.

The CPU 59 starts the supply of the liquid fuel to the liquid fuel injection valve 22 by operating the fuel pump 31 by outputting the fuel supply control signal to the pump drive circuit 55 when an operation instruction according to liquid fuel from the 2nd-ECU 6 through the communication circuit 58. Further, the CPU 59 executes the liquid fuel injection by the liquid fuel injection valve 22 by outputting the fuel injection control signal to the fuel injection valve drive circuit 54 at the time period when the piston 11 has reached a position corresponding to the fuel injection timing.

Further, the CPU 59 has a function which transmits a position of piston 11 which the piston itself recognizes, an engine rotations, an inlet air pressure value, an inlet air temperature value, a throttle opening degree value and a cooling water temperature value to the 2nd-ECU 6 through the communication circuit 58.

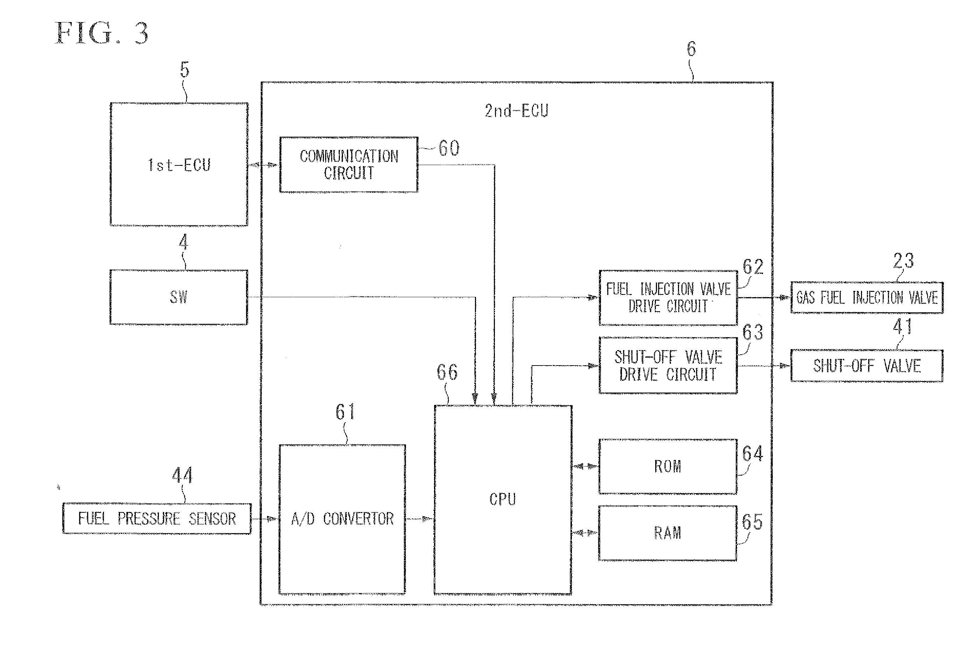

The 2nd-ECU 6 performs an operation control of the engine 1 mainly according to the liquid fuel and as shown in FIG. 3, includes a communication circuit 60, an A/D convertor 61, a fuel injection valve drive circuit 62, a shut-off valve drive circuit 63, a ROM 64, a RAM 65 and a CPU 66.

The communication circuit 60 is a communication interface for implementing data communication between the 1st-ECU 5 and the 2nd-ECU 6 under control by the CPU 66 and is connected with the 1st-ECU 5 (specifically, communication circuit 58) through the communication cable.
The A/D convertor 61 converts the fuel pressure detection signal input from the fuel pressure sensor 44 into digital signal (fuel pressure value) and outputs the converted signal to the CPU 66.

The fuel injection valve drive circuit 62 creates the fuel injection valve drive signal according to the fuel injection control signal input from the CPU 66 and outputs the fuel injection valve drive signal to the gas fuel injection valve 23.
The shut-off valve drive circuit 63 creates the shut-off valve drive signal according to the shut-off valve control signal input from the CPU 66 and outputs the shut-off valve drive signal to the shut-off valve 41.
The ROM 64 is a non-volatile memory for storing an engine control program or various set data in advance in order to implement the various functions of the CPU 66.
The RAM 65 is a volatile working memory for storing temporary storage destination of data when the CPU 66 runs the engine control program to perform various operations.

The CPU 66 controls an operation of the engine 1 by the liquid fuel, based on a fuel designation signal input from the fuel switchover switch 4 according to engine control program stored in the ROM 64, a position of the piston 11 acquired from 1st-ECU 5 through the communication circuit 60, a rotation number of the engine, an inlet air pressure value, an inlet air temperature value, a throttle opening degree value and a cooling water temperature value, and a fuel pressure value acquired from the A/D convertor 61.

Specifically, the CPU 66 transmits the operation instruction according to the liquid fuel to the 1st-ECU 5 (Specifically, communication circuit 58) through the communication circuit 60 when it is determined that the liquid fuel is designated as the fuel using in the engine 1, according to a result of the interpretation of the fuel designation signal input from the fuel switchover switch 4.

Meanwhile, the CPU 66 opens the shut-off valve 41 by outputting the shut-off control signal to the shut-off valve drive circuit 63 when it is determined that the gas fuel is designated as the fuel using in the engine 1, according to a result of the interpretation of the fuel designation signal input from the fuel switchover switch 4 (the fuel outlet of the gas fuel tank 40 is opened). Thus, the CPU 66 commences the supply of the gas fuel to gas fuel injection valve 23 and implements the injection of the gas fuel by the gas fuel injection valve 23 by outputting the fuel injection control signal to the fuel injection valve drive circuit 62 at the time period when the piston 11 has reached a position corresponding to the fuel injection timing.

The CPU 66 has a function which performs the different fuel switchover control in cases where the pressure of the gas fuel excesses an upper limit threshold value and falls below the lower limit threshold value when using the gas fuel as a characteristic function according to the present invention. Specifically, the CPU 66 controls to close the shut-off valve 41 in a case where the fuel pressure value acquired from the A/D convertor 61 falls below the lower limit threshold value (the fuel outlet of the gas fuel tank 40 is closed). And then, the CPU 66 stops the supply of the gas fuel to the gas fuel injection valve 23 and also stops the operation of the gas fuel injection valve 23 (stops the injection of the gas fuel by the gas fuel injection valve 23), and transmits the operation instruction according to the liquid fuel to the 1st-ECU 5 through the communication circuit 60 (the switchover to the liquid fuel is performed).

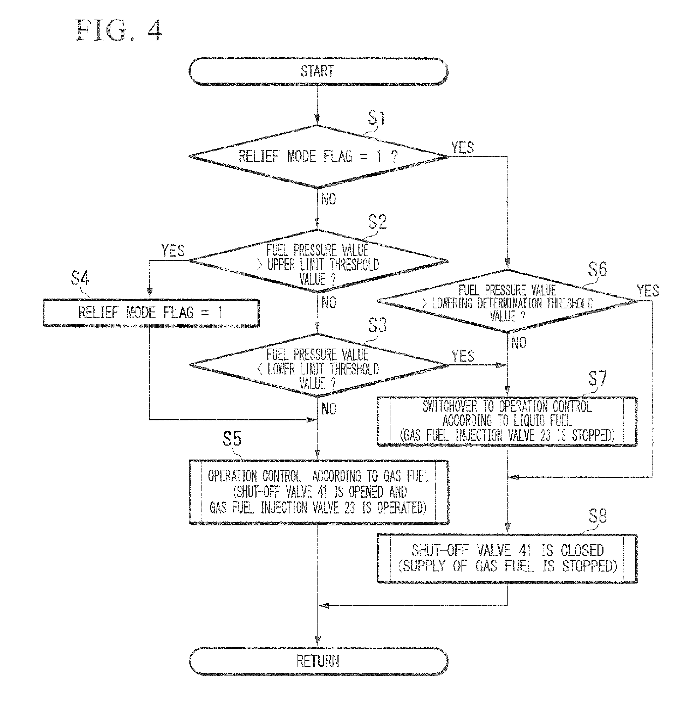

The CPU 66 closes the shut-off valve 41 so that the supply of the gas fuel to the gas fuel injection valve 23 is stopped, while the operation of the gas fuel injection valve 23 is continued, in a case where the fuel pressure value acquired from the A/D convertor 61 exceeds the upper limit threshold value when using the gas fuel (the injection of the gas fuel by the gas fuel injection valve 23 is continued). After that, in a case where the fuel pressure value falls below the lowering determination threshold value, the CPU 66 stops the operation of the gas fuel injection valve 23 and transmits the operation instruction according to the liquid fuel to the 1st-ECU 5 through the communication circuit 60.
Hereinafter, the fuel switchover control when using the gas fuel as above will be described in detail with reference to the flowchart of FIG. 4.

### <STEP S1>

CPU 66 controls to determine whether or not a relief mode flag is set to "1" as the process of the STEP S1 when using the gas fuel. In a case of "No", the process advances to STEP S2, while in a case of "Yes", the process advances to STEP S6. Herein, a relief mode flag is a flag which is set to "1" in a case where the pressure (fuel pressure value) of gas fuel exceeds the upper limit threshold value as mentioned later.

### <STEP S2>

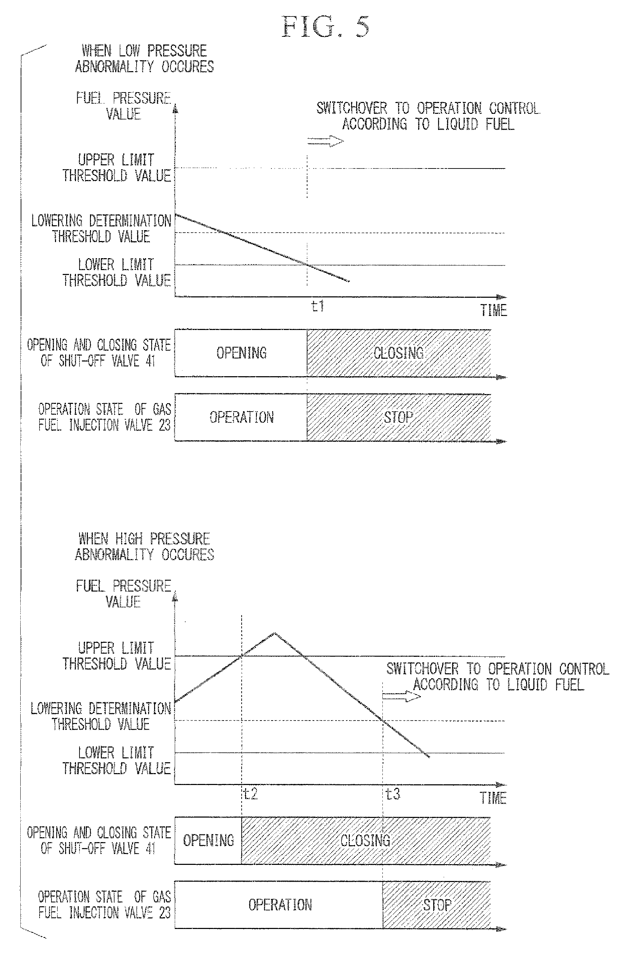

The CPU 66 determines that the fuel pressure value acquired from the A/D convertor 61 does not exceed the upper limit threshold value as the process of the STEP S2 in a case of "No" in the STEP S1, that is, in a case where the relief mode flag is not "1". In a case of "No", the process proceeds to the STEP S3, while in a case of "Yes", the process proceeds to the STEP S4. Herein, the upper limit threshold value is a limit threshold value for detecting that a high pressure abnormality has occurred in the gas fuel and is set to a lower value than the operation set pressure of the relief valve 45 (refer to FIG. 5).

### <STEP S3>

The CPU 66 determines that the fuel pressure value does not fall below the lower limit threshold value as the process of the STEP S3, in a case of "No" in the STEP S2, that is, in a case where the fuel pressure value acquired from the A/D convertor 61 does not exceed the upper limit threshold value. In a case of "No", the process proceeds to the STEP S5, while in a case of "Yes", the process proceeds to the STEP S7. Here, the lower limit threshold value is a limit threshold value for detecting that a low pressure abnormality has occurred in the gas fuel (refer to FIG. 5).

### <STEP S4>

The CPU 66 sets "1" to the relief mode flag as the process of the STEP S4 and then shifts to the process of the STEP S5, in a case of "Yes" in the STEP S2, that is, in a case the fuel pressure value acquired from the A/D convertor 61 exceed the upper limit threshold value.

### <STEP S5>

The CPU 66 performs the operation control of the engine 1 according to gas fuel as a process of the STEP S5 in a case of "No" in the STEP S3 or after termination of the STEP S4 (thereafter, the process returns to the STEP S1). Specifically, the CPU 66 opens the shut-off valve 41 by outputting the shut-off valve control signal to the shut-off valve drive circuit 63 (opens the fuel outlet of the gas fuel tank 40). Thus, the CPU 66 commences the supply of the gas fuel to the gas fuel injection valve 23 and implements the injection of the gas fuel by the gas fuel injection valve 23 by outputting the fuel injection control signal to the fuel injection valve drive circuit 62 at the time period when the piston 11 has reached a position corresponding to the fuel injection timing.

### <STEP S6>

The CPU 66 determines whether or not the fuel pressure value acquired from the A/D convertor 61 is higher than the lowering determination threshold value as the process of the STEP S6 in a case of "Yes" in the STEP S1, that is, in a case where the relief mode flag is set to "1". In a case of "No", the process proceeds to the STEP S7, while in a case of "Yes", the process proceeds to the STEP S8. Here, the lowering determination threshold value is a value for detecting that the fuel pressure value returns to the safe state from the high pressure abnormal state and is set to a value between the upper limit threshold value and the lower limit threshold value (refer to FIG. 5).

### <STEP S7>

The CPU 66 switchs the operation control of engine 1 according to the liquid fuel as process of the STEP S7 in a case of "Yes" in the STEP S3 or in a case of "No" in the STEP S6. Specifically, the CPU 66 stops the operation of the gas fuel injection valve 23 and also transmits the operation instruction according to the 1st-ECU 5 through the communication circuit 60. Thereby, the CPU 59 of the 1st-ECU 5 commences the supply of the liquid fuel to the liquid fuel injection valve 22 by the operation of the fuel pump 31 and implements the injection of the liquid fuel by the liquid fuel injection valve 22 at the time period when the piston 11 has reached a position corresponding to the fuel injection timing.

### <STEP S8>

The CPU 66 closes the shut-off valve 41 by outputting the shut-off valve control signal to the shut-off valve drive circuit 63 as a process of the STEP S8 in a case of "Yes" in the STEP S6 or after termination of the STEP S7 (the fuel outlet of the gas fuel tank 40 is shut-off). Thus, the CPU 66 stops the supply of the gas fuel to the gas fuel injection valve 23 (thereafter, the process is returned to the STEP S1).

FIG. 5(a) is a diagram illustrating an opening and closing state of the shut-off valve 41 and the operating state of the gas fuel injection valve 23 in a case where the low pressure abnormality has occurred at the time period when using the gas fuel. As shown in FIG. 5(a), it is assumed that the fuel pressure value falls below the lower limit threshold value at the timing t1 when declining with the passage of time due to the low pressure abnormality. In this case, the shut-off valve 41 is opened before the timing t1 and the gas fuel injection valve 23 is operated, whereby the operation control of the engine 1 according to gas fuel is continued.

Meanwhile, the shut-off valve 41 is closed after the timing t1 that the fuel pressure value falls below the lower limit threshold value and the gas fuel injection valve 23 is stopped, thereby performing the switchover to the operation control of the engine 1 according to the liquid fuel. In this way, in the case where the fuel pressure value falls below the lower limit threshold value, the operation control using the gas fuel is immediately stopped and the operation control is switched over to the operation control according to the liquid fuel, thereby, it is possible to prevent engine stalling due to a fuel shortage when a low pressure abnormality occurs.

FIG. 5(b) is a diagram illustrating an opening and closing state of the shut-off valve 41 and an operating state of the gas fuel injection valve 23, in a case where a high pressure abnormality has occurred at the time period when using the gas fuel. As shown in FIG. 5(b), it is assumed that the fuel pressure value exceeds the upper limit threshold value at the timing t2 when increasing due to the high pressure abnormality with the passage of time. In this case, the shut-off valve 41 is opened before the timing t2 and the gas fuel injection valve 23 is operated, thereby continuing the operation control of the engine 1 according to gas fuel.

Meanwhile, though the shut-off valve 41 is closed after the timing t2 that the fuel pressure value exceeds the upper limit threshold value, the operation of the gas fuel injection valve 23 is continued. In this way, the gas fuel remaining at the downstream of the regulator 42 is consumed by fuel injection and the fuel pressure value of the regulator 42 falls slowly. Thus, as shown in FIG. 5(b), after that the fuel pressure value exceeds the upper limit threshold value, if the fuel pressure value falls continuously through consumption of the gas fuel and has fallen below the lowering determination threshold value at a timing t3, the gas fuel injection valve 23 is stopped after the timing t3 and the operation control is switched over to an operation control of the engine 1 according to the liquid fuel.

In this way, in a case where the fuel pressure value exceeds the upper limit threshold value, the shut-off valve 41 is closed to stop the supply of the gas fuel, but the operation of the gas fuel injection valve 23 is continued until the fuel pressure value falls below the lowering determination threshold value. Thereby, the downstream of the regulator 42 can be prevented from being exposed to high pressure. As a result, it is possible to prevent the pipe for supplying fuel from damaging or the fuel injection valve from malfunctioning.

As above, according to the present embodiment, it is possible to perform the suitable switchover control of fuel according to the pressure state (high pressure abnormality or low pressure abnormality) of the gas fuel. Further, in a case where there is an occurrence of abnormal pressure of the gas fuel, the fuel used for the operation of the engine 1 is switched over from the gas fuel to the liquid fuel, thereby maintaining the travelling state of the vehicle and improving the safety with respect to fuel leakage. Accordingly, since there is no case where the operation using the gas fuel is performed in an abnormal pressure state of the fuel, it is possible to prevent deterioration of the emission and deterioration of the drivability at the time when an abnormality in the fuel pressure occurs.

Further, the present invention is not limited to the embodiments described above and includes the following modified embodiments:
(1) In the above mentioned embodiment, though there has been described an example of a bi-fuel engine system in which selectively switches over the liquid fuel such as gasoline and gas fuel such as the compressed natural gas (CNG) and supplies simply the selected fuel to the engine, it is possible to adapt the present invention to a system in which selectively switches over among multiple types of fuel to supply the selected fuel simply to the engine. For example, in a case of a system which can select from among CNG, gasoline and diesel oil, when there is an abnormality in the pressure of the CNG, it is preferable that the operation control switch over to an operation control using gasoline or diesel oil.

(2) In the above mentioned embodiment, although an example of a system providing the 1st-ECU 5 responsible for the operation control according to the liquid fuel and the 2nd-ECU 6 responsible for the operation control using the gas fuel has been described, it is preferable to employ a configuration unifying the functions of the two ECUs into one ECU.

### Industrial Applicability

According to the fuel switchover control device and method, when using a first fuel, in a case where the pressure of the first fuel exceeds the upper limit threshold value and falls below the lower limit threshold value, it is possible to perform a switchover control to a suitable fuel according to the pressure state (high pressure abnormality or low pressure abnormality) of the first fuel in order to perform a different fuel switchover control.

### Reference Signs List

- 1...: engine
- 2...: liquid fuel supply unit
- 3...: gas fuel supply unit
- 4...: fuel switchover switch
- 5...: 1st-ECU (Electronic Control Unit)
- 6...: 2nd-ECU
- 10...: cylinder
- 11...: piston
- 12...: connecting rod
- 13...: crankshaft
- 14...: inlet air valve
- 15...: outlet air valve
- 16...: ignition plug
- 17...: ignition coil
- 18...: inlet air pipe
- 19...: outlet air pipe
- 20...: air cleaner
- 21...: throttle valve
- 22...: liquid fuel injection valve
- 23...: gas fuel injection valve
- 24...: inlet air pressure sensor
- 25...: inlet air temperature sensor
- 26...: throttle opening degree sensor
- 27...: cooling water temperature sensor
- 28...: crank angle sensor
- 30...: liquid fuel tank
- 31...: fuel pump
- 40...: gas fuel tank
- 41...: shut-off valve
- 42...: regulator
- 43...: filter
- 44...: fuel pressure sensor
- 45...: relief valve
- 50...: waveform shaping circuit
- 51...: rotation counter
- 52...: A/D convertor
- 53...: ignition circuit
- 54...: fuel injection valve drive circuit
- 55...: pump drive circuit
- 56...: ROM (Read Only Memory)
- 57...: RAM (Random Access Memory)
- 58...: communication circuit
- 59...: CPU (Central Processing Unit)
- 60...: communication circuit
- 61...: A/D convertor
- 62...: fuel injection valve drive circuit
- 63...: shut-off valve drive circuit
- 64...: ROM
- 65...: RAM
- 66...: CPU

## Claims

1. A fuel switchover control device for an internal combustion engine (1) which can use multiple types of fuel, the device comprising:
controller which, when a first fuel is being used, performs different types of fuel switchover control, when a pressure of the first fuel exceeds an upper limit threshold value and when the pressure of the first fuel falls below a lower limit threshold value.

2. The fuel switchover control device according to Claim 1,
wherein the controller performs continuously an operation of an injection valve of the first fuel, while closing a shut-off valve of the first fuel, when the pressure of the first fuel exceeds the upper limit threshold value, and
the controller stops the operation of the injection of the first fuel and performs a switchover to other fuel, when the pressure of the first fuel falls below a lowering determination threshold value.

3. The fuel switchover control device according to Claim 1 or 2, wherein the controller closes the shut-off valve of the first fuel and stops the operation of the injection valve of the first fuel, and performs the switchover to other fuel, when the pressure of the first fuel falls below the lower limit threshold value.

4. A fuel switchover control method for an internal combustion engine which can use multiple types of fuel, the method comprising:
when a first fuel is being used, performing a different types of fuel switchover control when a pressure of the first fuel exceeds an upper limit threshold value and when a pressure of the first fuel falls below a lower limit threshold value.
